# EUROPEAN PATENT SPECIFICATION

(11) **EP 0 423 881 B1**
(45) Date of publication and mention of the grant of the patent: **09.02.1994**
(21) Application number: 90202708.5
(22) Date of filing: 12.10.1990
(51) Int. Cl.: G02F 1/1335, G02B 5/30

(54) **Liquid-crystal display device**
Flüssigkristall-Wiedergabeanordnung
Dispositif de reproduction à cristaux liquides

(30) Priority: 18.10.1989 NL 8902578
(43) Date of publication of application: 24.04.1991
(73) Proprietor: Philips Electronics N.V., 5621 BA Eindhoven (NL)
(72) Inventor: Heynderickx, Ingrid Emillienne Joanna Rita, Prof. Holstlaan 6, NL-5656 AA Eindhoven (NL); Broer, Dirk Jan, Prof. Holstlaan 6, NL-5656 AA Eindhoven (NL); Hikmet, Rifat Ata Mustafa, Prof. Holstlaan 6, NL-5656 AA Eindhoven (NL)
(74) Representative: Pennings, Johannes

(56) References cited:
- EP-A- 0 246 842
- EP-A- 0 367 288

## Description

The invention relates to a liquid-crystal display device comprising a liquid-crystal cell having a twisted nematic liquid-crystalline material which is arranged between two substrates having electrodes and between two polarizers, a layer of an optically anisotropic material being provided between the polarizers.

If desirable, the layer of optically anistropic material may be a self-supporting double-refracting foil. Such a display device (LCD) is described in European Patent Application EP-A2-0 246 842.

Chirality in liquid-crystalline materials leads to rotation of the molecules in a direction perpendicularly to the longitudinal axis. In the case of liquid-crystalline materials in the so-called cholesteric phase the pitch of the rotation is 0.1 to 1 µm. For application in, for example, datagraphic displays using multiplex drive a larger pitch of the order of magnitude of the cell thickness of the display device is desirable. Such materials are obtained by adding a chiral liquid-crystalline compound as a dopant to a nematic liquid crystal. With such materials, supertwisted nematic (STN) liquid-crystal display devices are manufactured, the total twist of the molecular axis across the cell being, for example, between 180° and 270°. Such display devices have the disadvantage that the optical properties depend to a large extent on the wavelength, so that a high contrast and a colourless image (black/white instead of blue/yellow) is difficult to attain. Said disadvantage can be overcome in known manner by using a combination of two identical cells one of which containing left-handed liquid-crystalline material and the other containing right-handed liquid-crystalline material. When the molecular axis at the front of the second cell extends perpendicularly to the molecular axis at the rear of the first cell the wavelength dependence of the optical properties is completely compensated. However, as a result of this the liquid-crystal display device becomes heavier and less compact. According to a simple alternative embodiment the second cell is replaced by a uniaxial foil having an adapted double-refraction. In this case, the colour compensation is not complete, resulting in a contrast reduction and the display device exhibiting a certain degree of colour in the voltageless state. Another known, qualitatively better solution consists in the use of a twisted stack of uniaxial foils. This solution gets closer to the ideal situation according as the number of foils increases, however, this leads to a considerably more complicated production process.

It is desirable to provide a double-refracting foil having a twist and a double-refraction which are equal to the twist and double-refraction of a supertwisted nematic liquid-crystal display device. Instead of a double-refracting foil it is alternatively possible to use a double-refracting layer on a suitable substrate.

In European Patent Application EP-A1-0 007 574 a description is given of liquid-crystalline polymer materials having a chiral dopant in the form of a copolymerizable monomer. Such polymer materials are linear and have side groups which exhibit liquid-crystalline properties. A thin layer is manufactured from a solution or a melt and is oriented in the rubbery liquid-crystalline state, after which it is cooled to a temperature below the glass transition temperature. Such layers are often turbid owing to local fluctuations in the refractive index caused by a poor order. Moreover, the operating temperature is indeed higher than that of low-molecular materials, but it is still limited because heating above the glass transition temperature, executed only once, leads to a permanent loss of order. Besides, the method to be used does not permit the pitch and the thickness of the polymer layer to be accurately adjusted.

One of the objects of the invention is to provide a liquid-crystal display device and a double-refracting foil or layer of optically anisotropic material for use in such a display device, the double-refracting foil or layer being optically clear and having a large temperature resistance. The invention thereby envisions to provide a supertwisted nematic liquid-crystal display device having a high contrast, the voltageless state being substantially completely dark and colourless and the voltage-conveying state being highly transparent. A further object of the invention is to provide a foil or an anisotropic layer which can be manufactured with the desired accuracy in a simple manner. Another object of the invention is to provide a material which can suitably be used in the double-refracting foil or layer.

According to the invention, this object is achieved by a liquid-crystal display device as described in the opening paragraph, which display device is characterized in that the layer of optically anisotropic material is formed from a synthetic resin composition which comprises a polymer network having a helicoidal order. The synthetic resin composition is preferably manufactured from a cured liquid-crystalline synthetic resin composition having a chiral dopant.

In a preferred embodiment of the display device according to the invention, the synthetic resin composition is formed by curing liquid-crystalline monomers or oligomers which consist of compounds with two or more acrylate-ester groups. Instead of acrylate compounds, epoxides, vinyl ethers and thiolene compounds can alternatively and satisfactorily be used as liquid-crystalline monomers.

An ordered synthetic resin composition can be obtained, for example, by orienting a liquid-crystalline monomer and freezing said orientation by exposure to UV light in the presence of a light-sensitive initiator. A chiral dopant, for example, a compound with an asymmetrically substituted carbon atom is added to the monomer. This dopant brings about a rotation of the monomer molecules in a direction perpendicularly to the longitudinal axis of the molecules. By arranging the monomer between two polyimide-coated and rubbed surfaces the degree of rotation can be adjusted as a function of the natural pitch (the pitch without the presence of rubbed surfaces), the distance between the rubbed surfaces and the direction of rubbing of the surfaces. Subsequently, the rotation in the still liquid monomer composition is fixed by polymerization of the reactive end groups under the influence of UV light or irradiation using electrons. The desired order is rapidly obtained and is substantially perfect, so that a clear film or thin layer is attained. As a result of the use of monomers having at least two functional groups an ordered polymer network is manufactured, the order of which is maintained up to very high temperatures.

Preferably, a curable synthetic resin composition is used having liquid-crystalline monomers or oligomers which consist of compounds with two or more acrylate-ester groups. If desirable, the curable synthetic resin composition may comprise a mixture of various oligomeric compounds. Besides, the synthetic resin composition may comprise one or more other suitable components such as, for example, catalysts, (light-sensitive) initiators, stabilizers, co-reacting monomers and surface-active compounds. It is alternatively possible to add, for example, a quantity up to 50% by weight of a nonpolymerizable liquid-crystalline material to adapt the optical properties of the material.

In a particular embodiment, the helicoidal order is obtained by arranging the synthetic resin composition between two substrates, each of the surfaces of the substrates contacting the curable synthetic resin composition being rubbed in one direction with, for example, a velvet cloth. The molecules of the liquid-crystalline compounds, in particular the mesogenic groups present therein, orient themselves in the direction of rubbing at the surfaces. The surfaces of the substrates preferably consist of polyimide.

Suitable compounds which can be cured in the oriented state, for example after having been provided on a rubbed substrate, are described in United States Patent Specification US 4,758,447. In the application described therein, no helicoidal order is pursued. A method of manufacturing suitable compounds is described in European Patent Application EP-A1-0 261 712.

As a rapid curing of the synthetic resin composition is desired, the curing operation is initiated, preferably, by means of actinic radiation. The expression actinic radiation is to be understood to mean herein radiation using light, in particular UV light, X-rays, gamma rays or radiation using high-energy particles such as electrons or ions.

The invention will be explained in greater detail by means of an exemplary embodiment and with reference to the accompanying drawing, in which
Figure 1 is a diagrammatic cross-sectional view of a liquid-crystal display device according to the invention,
Figure 2 shows the structural formula of liquid-crystalline compounds having two acrylate-ester groups,
Figure 3 shows the structural formula of a suitable chiral dopant, and
Figure 4 shows the transmission through a device according to the invention as a function of the wavelength, in the voltageless and the voltage-on state.

### Exemplary embodiment.

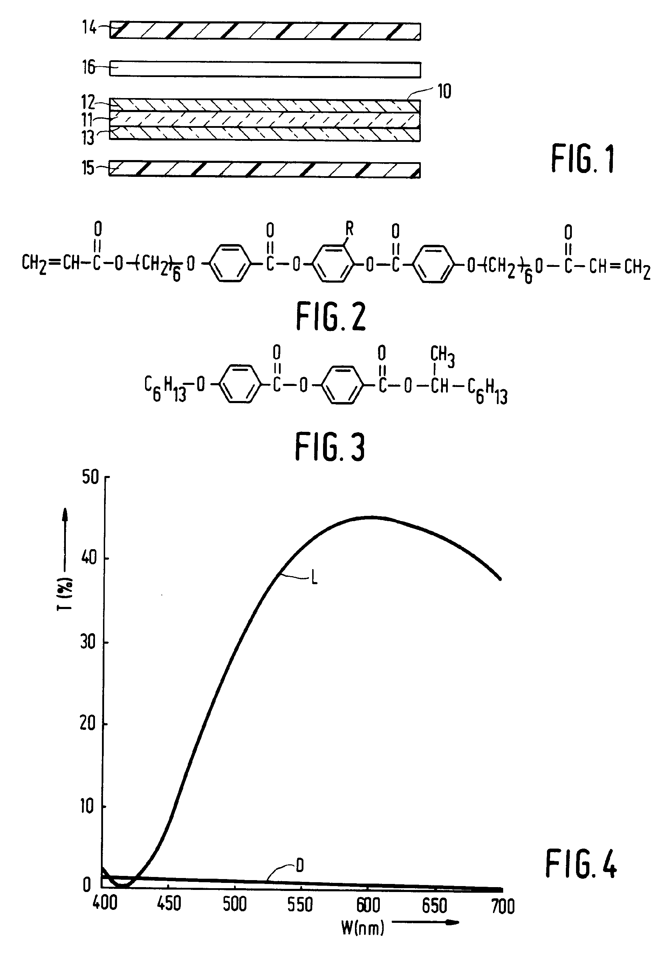

Figure 1 is a diagrammatic cross-sectional view of a liquid-crystal display device comprising a liquid-crystal cell 10 which is composed of a twisted nematic liquid-crystalline layer 11 between two electrode substrates 12, 13. The electrodes on the substrates 12, 13 are not shown in the drawing. The device comprises two polarizers 14, 15. The double-refracting film 16 (if desirable in the shape of a thin layer on a substrate of, for example, glass) is arranged between the polarizers 14, 15, just like the liquid-crystal cell 10.

The double-refracting layer 16 may be applied, for example, directly to the cell 10 by providing it with a rubbed polyimide layer on the outside and applying a suitable curable synthetic resin composition thereto. The orientation is obtained by means of an additional glass plate which in turn is provided with a rubbed polyimide layer and which is removed after the polymerization of said curable synthetic resin composition.

The thickness of layer 16 is, for examples 6 µm. The molecular axis at the front of the compensation layer 16 extends perpendicularly to the molecular axis at the rear of the twisted nematic liquid-crystalline layer 11. In the case of crossed polarizers this results in no transmission at any wavelength in the visible range and, hence, a colourless layer.

The adaptation of the layer 16 to the liquid-crystal cell 10 may be performed in various ways. The layer thickness and the total twist angle are determined by the way in which the rubbed surfaces are arranged relative to each other and relative to the curable synthetic resin composition. The natural pitch can be influenced by changing the concentration of the chiral dopant. The double refraction can be varied within the range relevant to supertwisted nematic liquid-crystalline display devices by selecting the polymerization temperature. In the following example, the double-refraction is 0.114 at a polymerization temperature of 100°C, after polymerization at 112°C the double-refraction is 0.108.

### Example of the manufacture of the double-refracting film or layer.

A starting mixture for a curable synthetic resin composition is manufactured from 80 parts by weight of a first diacrylate compound A, shown in Figure 2, where R is a methyl group, 20 parts by weight of a second diacrylate compound B, shown in Figure 2, where R is a hydrogen atom, and 1 part by weight of a light-sensitive initiator, in the present example 2,2-dimethoxy-2-phenyl-acetophenone, commercially available from Ciba-Geigy under the trade name Irgacure^{(R)} 651. A method of manufacturing the diacrylate compounds is described in European Patent Application EP-A1-0 261 712. The starting mixture additionally comprises 100 ppm of a stabilizer, for example hydroquinone monomethyl ether.

The starting mixture comprising 80 parts by weight of A and 20 parts by weight of B is a eutectic composition having a melting point of 80°C. The phase which exists at a higher temperature is a nematic phase which changes into an isotropic phase at a temperature of 121°C. The mixture is used between these two temperatures, both the highest viscosity and molecular order being obtained at the lowest temperatures.

According to the present example, different quantities of a chiral dopant are added to the starting mixture, for example left-handed 4-(4-hexyloxy-benzoyloxy)benzoic acid-2-octyl-ester, see Figure 3, commercially available from Merck under the number S811. The chiral dopant itself does not have to exhibit liquid-crystalline properties and may be both a copolymerizing monomer and a nonpolymerizable compound. To obtain a twisted nematic order in the polymer it is sufficient for the compound to be chiral. The chiral dopant may be left-handed or right-handed.

A layer of the material thus obtained exhibits a nematic order, with a helical structure, also termed cholesteric order. The natural pitch of the mixture depends on the quantity of the chiral dopant added and is approximately 28 µm at 0.5 mol.% and approximately 2.5 µm at 6 mol.%. The natural pitch depends to a small extent on the temperature and is 2.17 µm at 80°C, 2.31 µm at 100°C and 2.35 µm at 113°C when 6.67 mol.% of the chiral compound is used. At such a quantity the transition to the isotropic phase takes place at a temperature of 114°C.

According to this example, the curable synthetic resin composition is cured by photopolymerization using exposure to ultraviolet light produced by a short-arc mercury lamp having a radiation intensity on the surface to be cured from 2 to 5 mW/cm² for 3 minutes at 100°C. During curing the orientation is fixed, the overall rotation angle of the layer remaining constant. For this reason, the variation in pitch during curing depends only on the change in layer thickness as a result of possible polymerization shrinkage. The rotation angle is a measure of the number of revolutions in the molecular spiral in the cholesteric nematic phase.

In the polymerization operation substantially no change takes place in the product dΔn which is considered to be important for optical applications, d being the layer thickness and Δn being the double-refraction of the material. As the material shrinks in only one direction during polymerization, the change in layer thickness is inversely proportional to the change in density of the materials which latter quantity is proportional to the degree of double-refraction.

The rotation angle of the polymer film thus obtained exhibits no temperature dependence in the range from room temperature to 250°C. This proves the complete impedance of molecular re-orientation as a result of the network of polymer molecules formed by cross-links. As the monomers contain two acrylate-ester groups per molecule, cross-linking is so strong that substantially no movement is possible in the rigid parts of the liquid-crystalline molecules.

In comparison with, for example, cholesteric polymers having chiral groups in side chains, the pitch has a small temperature dependence.

Within certain limits, the pitch can be influenced by curing the synthetic resin composition between two substrates. Preferably, flat substrates of polyimide or glass having a cladding of polyimide are used. The polyimide surface is rubbed uniaxially, for example with a velvet cloth. The pitch depends on the distance between the two substrates, according to this example, for example, 6 µm, and the angle between the two directions of rubbing the polyimide surfaces. The number of revolutions of the molecular spiral adjusts itself such that the pitch obtained does not differ too much from the natural pitch.

Figure 4 shows the transmission T as a function of the wavelength W through a device according to the invention, having an anisotropic layer with a thickness of 6 µm and a rotation angle of 180°. In the voltageless state (D) there is a uniformly low transmission throughout the measured wave range. The dark state of the display device is colourless, which results in an optimum contrast. For comparison, the voltage-on state (L) is also shown, a transmission of approximately 40% being attained. The light state exhibits some degree of coloration but this is of less importance for the contrast to be obtained.

## Claims

1. A liquid-crystal display device comprising a liquid-crystal cell (10) having a twisted nematic liquid-crystalline material (11) which is arranged between two substrates (12, 13) having electrodes and between two polarizers (14, 15), a layer (16) of an optically anisotropic material being provided between said polarizers (14, 15), characterized in that the layer (16) of optically anisotropic material is formed from a synthetic resin composition which comprises a polymer network having a helicoidal order.

2. A liquid-crystal display device as claimed in Claim 1, characterized in that the synthetic resin composition is formed from a cured liquid-crystalline synthetic resin composition having a chiral dopant.

3. A liquid-crystal display device as claimed in Claim 2, characterized in that the synthetic resin composition is formed by curing liquid-crystalline monomers or oligomers consisting of compounds having two or more acrylate-ester groups.

## Patentansprüche

1. Flüssigkristall-Wiedergabeanordnung mit einer Flüssigkristallzelle (10) mit einem verdrillt nematischen flüssigkristallinen Material (11) zwischen zwei mit Elektroden versehenen Trägern (12, 13) und zwischen zwei Polarisatoren (14, 15), wobei sich zwischen den Polarisatoren (14, 15) eine Schicht (16) eines optisch anisotropen Materials befindet, dadurch gekennzeichnet, daß die Schicht (16) aus optisch anisotropem Material aus einer Kunststoffzusammensetzung gebildet ist, die ein Polymernetzwerk mit einer Helixordnung umfaßt.

2. Flüssigkristallwiedergabeanordnung nach Anspruch 1, dadurch gekennzeichnet, daß die Kunststoffzusammensetzung aus einer ausgehärteten flüssigkristallinen Kunststoffzusammensetzung mit einer chiralen Dotierung besteht.

3. Flüssigkristallwiedergabeanordnung nach Anspruch 2, dadurch gekennzeichnet, daß die Kunststoffzusammensetzung durch Aushärtung von flüssigkristallinen Monomeren oder Oligomeren gebildet ist, die aus Verbindungen mit zwei oder mehr Acrylatestergruppen bestehen.

## Revendications

1. Dispositif d'affichage à cristaux liquides comportant une cellule à cristaux liquides (10) présentant un matériau à cristaux liquides nématique twisté (11) disposé entre deux substrats (12, 13) présentant des électrodes et entre deux polariseurs (14, 15), une couche (16) d'un matériau optiquement anisotropique étant prévue entre lesdits polariseurs (14, 15), caractérisé en ce que la couche (16) de matériau optiquement anisotropique est formée à partir d'une composition de résine synthétique comportant un réseau polymère présentant un ordre hélicoïdal.

2. Dispositif d'affichage à cristaux liquides selon la revendication 1, caractérisé en ce que la composition de résine synthétique est fabriquée en partant d'une composition de résine synthétique durcie à cristaux liquides comportant un dopant chiral.

3. Dispositif d'affichage à cristaux liquides selon la revendication 2, caractérisé en ce que la composition de résine synthétique est formée en durcissant des monomères ou des oligomères à cristaux liquides constitués de composés comportant deux ou plusieurs groupes d'acryl-ester.
